# EUROPÄISCHE PATENTANMELDUNG

(11) **EP 3 326 499 A1**
(43) Veröffentlichungstag der Anmeldung: **30.05.2018**
(21) Anmeldenummer: 17202939.9
(22) Anmeldetag: 22.11.2017
(51) Int. Cl.: A47J 31/18, A47J 31/02, A47J 31/057, A47J 31/06, A47J 31/44

(54) **HEISSGETRÄNKEAUTOMAT MIT BRÜHKAMMER-ERKENNUNGSMITTELN**

(30) Priorität: 23.11.2016 DE 102016122617
(71) Anmelder: Vorwerk & Co. Interholding GmbH, 42275 Wuppertal (DE)
(72) Erfinder: BAPAT, Aniket, 40882 Ratingen (DE)
(74) Vertreter: Cohausz & Florack

(57) **Zusammenfassung**

Die Erfindung betrifft einen Heißgetränkeautomaten (4), insbesondere Teeautomaten, eingerichtet zur automatischen Zubereitung von Heißgetränken, insbesondere Teegetränken, mit einem Grundgerät (8), das eine Brühkammer-Aufnahme (10) aufweist, in die eine separate Brühkammer (6, 54a-c) zum Brühen des Heißgetränks einsetzbar ist, wobei der Heißgetränkeautomat (4) Brühkammer-Erkennungsmittel (20) aufweist, die dazu eingerichtet sind, eine vorgegebene Brühkammer-Kennung (26, 56a-c) einer in die Brühkammer-Aufnahme (10) eingesetzten Brühkammer (6, 54a-c) zu erfassen und zu erkennen. Die Erfindung betrifft weiterhin ein System (2, 52) umfassend einen solchen Heißgetränkeautomaten (4) sowie ein Verfahren (30, 70) zur Steuerung eines solchen Heißgetränkeautomaten (4).

## Beschreibung

Die Erfindung betrifft einen Heißgetränkeautomaten, eingerichtet zur automatischen Zubereitung von Heißgetränken, insbesondere einen Teeautomaten, eingerichtet zur automatischen Zubereitung von Teegetränken, mit einem Grundgerät, das eine Brühkammer-Aufnahme aufweist, in die eine separate Brühkammer zum Brühen des Heißgetränks einsetzbar ist. Die Erfindung betrifft weiterhin ein System mit einem solchen Heißgetränkeautomaten und einer Brühkammer sowie ein Verfahren zur Steuerung eines solchen Heißgetränkeautomaten.

Ein solcher Heißgetränkeautomat ermöglicht die automatische Zubereitung von Heißgetränken. Handelt es sich bei dem Heißgetränkeautomaten um einen Teeautomaten, so ermöglicht dieser z.B. die automatische Zubereitung von Teegetränken.

Für einen Brühvorgang wird die Brühkammer in die Brühkammer-Aufnahme eingesetzt. Bei einem Teeautomaten werden Teeblätter in die Brühkammer gegeben, beispielsweise indem ein Teesiebeinsatz mit Teeblättern befüllt und in die Brühkammer eingesetzt wird. Eine Steuereinrichtung des Teeautomaten kann dann die Zubereitung des Teegetränks durchführen, indem eine vorgegebene Menge heißen Wassers in die Brühkammer eingeleitet wird und die Teeblätter zum Beispiel durch Herabfahren des Teesiebeinsatzes innerhalb der Brühkammer mit dem heißen Wasser in Kontakt gebracht werden. Der Brühvorgang kann nach einer vorgegebenen Zeit beendet werden, zum Beispiel indem der Teesiebeinsatz wieder heraufgefahren und damit die Teeblätter wieder aus dem Wasser bzw. dem fertigen Teegetränk entfernt werden.

Aus dem Stand der Technik sind Teeautomaten mit separaten, entnehmbaren Brühkammern bekannt. Durch die Entnehmbarkeit der Brühkammer ist diese für den Benutzer einfacher zu reinigen. Allerdings birgt die Entnehmbarkeit der Brühkammer auch ein gewisses Sicherheitsrisiko. Liefe zum Beispiel der Brühvorgang trotz Entnahme der Brühkammer weiter, so könnte heißes Wasser aus dem Teeautomaten austreten und den Benutzer verbrühen.

Um dies zu verhindern, werden im Stand der Technik zum Teil mechanische oder elektrische Sicherheitsschalter verwendet, die durch das Einsetzen der Brühkammer geschlossen und durch das Entnehmen der Brühkammer geöffnet werden, wobei der Brühvorgang nur bei geschlossenem Sicherheitsschalter durchgeführt wird. Diese Schalter lassen sich jedoch relativ einfach umgehen, beispielsweise indem sie mit der Hand betätigt oder durch Klebstoff, Klebeband oder auf andere Weise blockiert werden, so dass sich ein Sicherheitsrisiko ergibt.

Ein weiteres Problem besteht darin, dass Brühkammern sicherheitsrelevante Komponenten sind, da aus einer ungeeigneten oder beschädigten Brühkammer heißes Wasser austreten und den Benutzer verbrühen kann. Für die Produktsicherheit des Heißgetränkeautomaten ist es daher erforderlich, dass die Brühkammer bestimmten Sicherheits- und Qualitätsanforderungen genügt. Werden statt einer geprüften Originalbrühkammer aus hitzebeständigem Glas beispielsweise ungeprüfte Nachbau-Brühkammern aus einfachem oder fehlerhaftem Glas eingesetzt, so können diese beim Befüllen mit heißem Wasser reißen oder platzen, so dass der Benutzer des Heißgetränkeautomaten durch austretendes heißes Wasser oder Glassplitter gefährdet wird. Durch die aus dem Stand der Technik bekannten Sicherheitsschalter wird dieses Problem nicht gelöst.

Vor diesem Hintergrund liegt der vorliegenden Erfindung die Aufgabe zu Grunde, einen Heißgetränkeautomaten, ein System mit einem solchen Heißgetränkeautomaten und ein Verfahren zur Steuerung des Heißgetränkeautomaten zur Verfügung zu stellen, mit denen eine höhere Produktsicherheit erreicht wird.

Diese Aufgabe wird bei einem Heißgetränkeautomaten eingerichtet zur automatischen Zubereitung von Heißgetränken, mit einem Grundgerät, das eine Brühkammer-Aufnahme aufweist, in die eine separate Brühkammer zum Brühen des Heißgetränks einsetzbar ist, erfindungsgemäß dadurch gelöst, dass der Heißgetränkeautomat Brühkammer-Erkennungsmittel aufweist, die dazu eingerichtet sind, eine vorgegebene Brühkammer-Kennung einer in die Brühkammer-Aufnahme eingesetzten Brühkammer zu erfassen und zu erkennen. Bei dem Heißgetränkeautomat kann es sich insbesondere um einen Teeautomaten handeln, der zur automatischen Zubereitung von Teegetränken eingerichtet ist.

Weiterhin wird die Aufgabe erfindungsgemäß durch ein System umfassend einen solchen Heißgetränkeautomaten und eine Brühkammer, die in die Brühkammer-Aufnahme des Heißgetränkeautomaten einsetzbar ist, gelöst, wobei die Brühkammer eine Kennung aufweist und wobei die Brühkammer-Erkennungsmittel dazu eingerichtet sind, die Kennung der Brühkammer zu erfassen und zu erkennen.

Die zuvor beschriebene Aufgabe wird ebenso durch eine Brühkammer für ein solches System, die dazu eingerichtet ist, in den zuvor beschriebenen Heißgetränkeautomaten eingesetzt zu werden, gelöst, wobei die Brühkammer eine maschinenlesbare Brühkammer-Kennung aufweist, die eine Identifikation der Brühkammer durch die Brühkammer-Erkennungsmittel des Heißgetränkeautomaten erlaubt.

Außerdem wird die Aufgabe erfindungsgemäß durch ein Verfahren zur Steuerung eines solchen Heißgetränkeautomaten gelöst, bei dem die Brühkammer-Erkennungsmittel eine Brühkammer-Kennung einer in die Brühkammer-Aufnahme eingesetzten Brühkammer erfassen, bei dem die Brühkammer-Erkennungsmittel die erfasste Brühkammer-Kennung erkennen und bei dem der Heißgetränkeautomat abhängig von der erfassten Brühkammer-Kennung gesteuert wird.

Auf diese Weise ist der Heißgetränkeautomat in der Lage festzustellen, ob es sich bei der eingesetzten Brühkammer um eine für den Heißgetränkeautomaten zugelassene bzw. geeignete Brühkammer handelt und damit ein sicherer Betrieb möglich ist.

Der Heißgetränkeautomat weist ein Grundgerät auf. Bei dem Grundgerät kann es sich insbesondere um ein stationäres Gerät handeln. Das Grundgerät weist Komponenten wie zum Beispiel eine Steuereinrichtung, eine Benutzerschnittstelle, eine Wasserversorgung und ein Wassererhitzungsaggregat auf, die neben der separaten Brühkammer für den Betrieb des Heißgetränkeautomaten erforderlich sind.

Das Grundgerät weist eine Brühkammer-Aufnahme auf, in die eine separate Brühkammer zum Brühen des Heißgetränks einsetzbar ist. Insbesondere kann die Brühkammer-Aufnahme Haltemittel, wie zum Beispiel eine Rastverriegelung, aufweisen, mit denen die Brühkammer nach dem Einsetzen sicher in der Brühkammer-Aufnahme gehalten wird. Oberhalb der Brühkammer-Aufnahme verläuft vorzugsweise eine Heißwasserzuleitung, über die zur Durchführung eines Brühvorgangs heißes Wasser in die Brühkammer eingeleitet werden kann.

Das System umfasst neben dem Heißgetränkeautomaten eine in dessen Brühkammer-Aufnahme einsetzbare Brühkammer. Insbesondere sind die Abmessungen der Brühkammer und der Brühkammer-Aufnahme aneinander angepasst. Die Brühkammer ist vorzugsweise nach oben geöffnet, so dass über eine im Grundgerät vorgesehene Heißwasserzuleitung heißes Wasser von oben in die Brühkammer eingeleitet werden kann, wenn die Brühkammer in die Brühkammer-Aufnahme eingesetzt ist.

Die Brühkammer ist separat. Das heißt, die Brühkammer ist nicht dauerhaft mit dem Grundgerät des Teeautomaten verbunden, sondern eine separate Komponente, die bei Bedarf in die Brühkammer-Aufnahme eingesetzt oder aus dieser wieder entnommen werden kann (entnehmbare Brühkammer).

Die Brühkammer kann beispielsweise als nach oben geöffneter Hohlzylinder mit einem Boden ausgebildet sein, in den vorzugsweise ein Auslass zum Auslassen des fertigen Heißgetränks am Ende des Brühvorgangs integriert ist. Die Wandung der Brühkammer besteht insbesondere aus einem Material, das den thermischen und mechanischen Belastungen durch das Einfüllen von heißem Wasser, ggf. mit einer Temperatur von 100 °C, standhalten kann. Beispielsweise kann die Wandung der Brühkammer aus hitzebeständigem Glas bestehen.

Der Heißgetränkeautomat weist Brühkammer-Erkennungsmittel auf, die vorzugsweise in das Grundgerät integriert sind. Die Brühkammer-Erkennungsmittel sind dazu eingerichtet, eine vorgegebene Brühkammer-Kennung einer in die Brühkammer-Aufnahme eingesetzten Brühkammer zu erfassen. Zu diesem Zweck umfassen die Brühkammer-Erkennungsmittel insbesondere eine vorzugsweise optische Erfassungseinrichtung im Bereich der Brühkammer-Aufnahme, wie zum Beispiel eine Kamera. Eine solche Kamera nimmt Bilddaten einer in die Brühkammer-Aufnahme eingesetzten Brühkammer auf und kann damit eine Brühkammer-Kennung auf der Brühkammer erfassen, wenn die Brühkammer richtig in der Brühkammer-Aufnahme angeordnet ist.

Die Brühkammer-Erkennungsmittel sind weiter dazu eingerichtet, eine vorgegebene Brühkammer-Kennung einer in die Brühkammer-Aufnahme eingesetzten Brühkammer zu erkennen. Zu diesem Zweck umfassen die Brühkammer-Erkennungsmittel insbesondere Auswertemittel, die die von den Brühkammer-Erkennungsmitteln erfassten Signale, insbesondere die von einer Kamera erfassten Bilddaten, auswerten und prüfen, ob diese eine Brühkammer-Kennung enthalten und ob die erfasste Brühkammer-Kennung vorgegebenen Prüfkriterien entspricht. Beispielsweise können die Auswertemittel prüfen, ob die Brühkammer-Kennung ein bestimmtes Text- und/oder Bildelement enthält oder einen maschinenlesbaren Code mit einem bestimmten Inhalt. Als Auswertemittel kommt beispielsweise eine Steuereinrichtung des Heißgetränkeautomaten in Betracht. Die Steuereinrichtung weist insbesondere einen Mikroprozessor und einen Speicher auf, auf dem ein Computerprogramm gespeichert ist, dessen Ausführung auf dem Mikroprozessor die Analyse der erfassten Signale bewirkt.

Im Folgenden werden verschiedene Ausführungsformen des Heißgetränkeautomaten, des Systems und des Verfahrens beschrieben, wobei die einzelnen Ausführungsformen jeweils für den Heißgetränkeautomaten, das Systems und das Verfahren anwendbar sind. Die Ausführungsformen können zudem miteinander kombiniert werden.

Bei einer ersten Ausführungsform sind die Brühkammer-Erkennungsmittel dazu eingerichtet, die vorgegebene Brühkammer-Kennung der Brühkammer berührungsfrei, insbesondere optisch, zu erfassen. Auf diese Weise kann die Brühkammer-Kennung erfasst werden, ohne dass ein mechanischer Eingriff zwischen den Brühkammer-Erkennungsmitteln und der Brühkammer erforderlich ist. Beispielsweise kann die Brühkammer einen RFID-Transponder mit einer Brühkammer-Kennung und die Brühkammer-Erkennungsmittel ein entsprechendes RFID-Lesegerät aufweisen.

Vorzugsweise erfolgt die Erfassung optisch. Zu diesem Zweck können die Brühkammer-Erkennungsmittel insbesondere eine Kamera aufweisen, die im Bereich der Brühkammer-Aufnahme angeordnet ist. Bei einer optischen Erfassung kann eine Brühkammer sehr einfach und kostengünstig mit einer Brühkammer-Kennung versehen werden, beispielsweise indem die Brühkammer-Kennung als Text, Bild und/oder Code auf die Brühkammer aufgedruckt wird.

Bei einer weiteren Ausführungsform sind die Brühkammer-Erkennungsmittel dazu eingerichtet zu erfassen, ob sich die in die Brühkammer-Aufnahme eingesetzte Brühkammer in einer vordefinierten Position in der Brühkammer-Aufnahme befindet. Auf dieser Weise kann insbesondere überprüft werden, ob sich die Brühkammer-Aufnahme in der für den Brühvorgang vorgesehenen Position befindet, so dass eine sichere Durchführung des Brühvorgangs gewährleistet ist.

Diese Ausführungsform ist besonders vorteilhaft, wenn die Brühkammer-Erkennungsmittel für eine optische Erfassung der Brühkammer-Kennung eingerichtet sind, insbesondere mittels einer Kamera. In diesem Fall kann zum Beispiel aus den erfassten Bilddaten durch Bildanalyse bestimmt werden, ob die Brühkammer richtig positioniert ist. Weiter bevorzugt ist die Kamera so angeordnet und eingerichtet, dass sie eine an einer vorgegebenen Position einer Brühkammer angebrachte Brühkammer-Kennung nur dann vollständig erfasst und erkennt, wenn die Brühkammer sich in der richtigen Position befindet. Die Positionierung der Kamera am Grundgerät sowie deren Erfassungsbereich und die Positionierung der Brühkammer-Kennung an der Brühkammer des Systems sind vorzugsweise entsprechend aneinander angepasst.

Bei einer weiteren Ausführungsform weist der Heißgetränkeautomat eine Steuereinrichtung auf, die dazu eingerichtet ist, den Heißgetränkeautomaten abhängig vom Erkennen einer vorgegebenen Brühkammer-Kennung zu steuern. Ergibt beispielsweise die Analyse von Bilddaten einer Kamera der Brühkammer-Erkennungsmittel, dass die Bilddaten eine Brühkammer-Kennung enthalten, die vorgegebenen Prüfkriterien entspricht, so wird der Heißgetränkeautomat von der Steuereinrichtung anders gesteuert, als wenn keine Brühkammer-Kennung erkannt wird. Beispielsweise kann die Steuereinrichtung über eine Benutzerschnittstelle wie zum Beispiel einen Bildschirm eine Bestätigung ausgeben, wenn eine Brühkammer-Kennung erkannt wurde, bzw. eine Warnung ausgeben, wenn keine Brühkammer-Kennung erkannt wurde.

Bei einer weiteren Ausführungsform ist die Steuereinrichtung dazu eingerichtet, eine Funktion des Heißgetränkeautomaten abhängig vom Erkennen einer vorgegebenen Brühkammer-Kennung freizugeben, insbesondere eine Funktion, bei der heißes Wasser in die Brühkammer eingeleitet wird. Auf diese Weise kann vor dem Einleiten des Wassers in die Brühkammer sichergestellt werden, dass die Brühkammer für die Verwendung mit dem Teeautomaten geeignet bzw. zugelassen ist. Insbesondere kann die Steuereinrichtung eine Funktion des Heißgetränkeautomaten aus Sicherheitsgründen blockieren, wenn die Brühkammer-Erkennungsmittel keine Brühkammer-Kennung erkennen.

Bei einer weiteren Ausführungsform ist die Steuereinrichtung dazu eingerichtet, das Erkennen einer vorgegebenen Brühkammer-Kennung während der Zubereitung eines Heißgetränks, insbesondere während eines Brühvorgangs, zu überprüfen. Auf diese Weise kann während der Zubereitung eines Heißgetränks überprüft werden, ob sich eine geeignete bzw. zugelassene Brühkammer weiterhin in der richtigen Position in der Brühkammer-Aufnahme befindet. Insbesondere können die Brühkammer-Erkennungsmittel mehrfach oder kontinuierlich Signale, insbesondere Bilddaten, erfassen, die dann auf das Vorhandensein einer gültigen Brühkammer-Kennung analysiert werden. Vorzugsweise ist die Steuereinrichtung dazu eingerichtet, die Zubereitung eines Heißgetränks bzw. den Brühvorgang zu unterbrechen, wenn keine gültige Brühkammer-Kennung mehr erkannt wird, da dies anzeigt, dass die Brühkammer aus der Brühkammer-Aufnahme entfernt wurde oder dort nicht mehr richtig positioniert ist.

Bei einer weiteren Ausführungsform sind die Brühkammer-Erkennungsmittel dazu eingerichtet, verschiedene vorgegebene Brühkammer-Kennungen zu erkennen, und die Steuereinrichtung ist dazu eingerichtet, den Heißgetränkeautomaten entsprechend einer der erkannten Brühkammer-Kennung zugeordneten Steueranweisung zu steuern. Auf diese Weise ist der Heißgetränkeautomat in der Lage, zwischen verschiedenen Brühkammern zu unterscheiden.

Bei einer entsprechenden Ausführungsform des Systems umfasst dieses mehrere separate Brühkammern, die in die Brühkammer-Aufnahme des Heißgetränkeautomaten einsetzbar sind, wobei jede der Brühkammern jeweils eine individuelle Brühkammer-Kennung aufweist, die eine Unterscheidung der einzelnen Brühkammern voneinander erlaubt.

Die verschiedenen Brühkammer-Kennungen können beispielsweise jeweils einen maschinenlesbaren Code wie zum Beispiel einen Barcode oder QR-Code aufweisen, in dem eine individuelle Bezeichnung oder Nummer wie zum Beispiel eine Seriennummer der jeweiligen Brühkammer codiert ist. Die Brühkammer-Erkennungsmittel können dann diese Bezeichnung oder Nummer aus dem maschinenlesbaren Code auslesen und daran die Brühkammer von anderen Brühkammern unterscheiden.

Einige Benutzer von Heißgetränkeautomaten haben das Bedürfnis, verschiedene Getränkesorten in verschiedenen Brühkammern zuzubereiten, damit sich keine Aromastoffe, Farbstoffe oder andere Substanzen von einer Getränkeart, beispielsweise von einem aromatisierten Früchtetee, auf eine andere Getränkesorte, beispielsweise einen grünen Tee, übertragen. Mit der zuvor beschriebenen Ausführungsform ist der Benutzer nun in der Lage, verschiedene Brühkammern für verschiedene Getränkearten bzw. Teesorten zu verwenden, wobei der Heißgetränkeautomat die Brühkammer selbst identifiziert.

Beispielsweise kann die Steuereinrichtung dazu eingerichtet sein, eine in der Brühkammer-Kennung codierte Bezeichnung oder Nummer oder eine davon abhängige Nachricht auf einem Bildschirm des Heißgetränkeautomaten anzuzeigen, so dass der Benutzer erkennen kann, welche Brühkammer eingesetzt ist.

Bei einer weiteren Ausführungsform ist die Steuereinrichtung dazu eingerichtet, eine Information über den Betrieb des Heißgetränkeautomaten der Brühkammer-Kennung der während des Betriebs eingesetzten Brühkammer zuzuordnen und in einem Speicher des Heißgetränkeautomaten abzuspeichern. Bei der Information kann es sich beispielswiese um ein vom Benutzer ausgewähltes Betriebsprogramm (z.B. für eine bestimmte Getränkesorte) oder um einen oder mehrere Brühparameter, beispielsweise eine Brühzeit und/oder Brühtemperatur, handeln. Auf diese Weise kann einer Brühkammer über die Brühkammer-Kennung eine Information zugeordnet werden, die zum Beispiel bei einem späteren erneuten Einsetzen derselben Brühkammer automatisch abgerufen werden kann.

Bei einer weiteren Ausführungsform ist die Steuereinrichtung dazu eingerichtet, eine der erkannten Brühkammer-Kennung zugeordnete Information über den Betrieb des Heißgetränkeautomaten aus einem Speicher des Heißgetränkeautomaten abzurufen und den Heißgetränkeautomaten abhängig von der abgerufenen Information zu steuern. Die Information kann beispielsweise ein Betriebsprogramm oder einen Betriebsparameter umfassen, die der betreffenden Brühkammer-Kennung zugeordnet sind. Beispielsweise kann die Steuereinrichtung automatisch eine von der der Brühkammer-Kennung zugeordneten Information abhängige Benutzerausgabe über eine Benutzerschnittstelle des Heißgetränkeautomaten ausgeben. Weiterhin kann die Steuereinrichtung automatisch die Brühparameter für einen Brühvorgang einstellen, wenn die zugeordnete Information Brühparameter enthält. Auf diese Weise kann der Heißgetränkeautomat automatisch auf die eingesetzte Brühkammer eingestellt bzw. abhängig von dieser gesteuert werden.

Ein besonderer synergetischer Effekt ergibt sich bei Kombination der beiden zuletzt beschriebenen Ausführungsformen zum Abspeichern und Abrufen von der Brühkammer-Kennung zugeordneten Informationen. Auf diese Weise kann ein bei einer vorherigen Nutzung eingestellter Zustand des Heißgetränkeautomaten, z.B. hinsichtlich eines Brühparameters, beim erneuten Einsetzen der Brühkammer automatisch wieder eingestellt werden. Der Heißgetränkeautomat "erinnert" sich also automatisch an die letzte Nutzung der Brühkammer.

Bei einer Ausführungsform ist die Steuereinrichtung dazu eingerichtet, eine Benutzereinstellung an dem Heißgetränkeautomat, beispielsweise eine Programmauswahl für eine bestimmte Getränkesorte, anhand einer der Brühkammer-Kennung der eingesetzten Brühkammer zugeordneten Information zu prüfen und abhängig vom Ergebnis der Prüfung eine Benutzerausgabe auszugeben. Beispielsweise kann die Steuereinrichtung die Ausgabe einer Warnmeldung veranlassen, wenn der Benutzer bei einer Brühkammer für weißen Tee ein Brühprogramm für schwarzen Tee auswählt.

Bei einer weiteren Ausführungsform weist der Heißgetränkeautomat eine Steuereinrichtung auf, die dazu eingerichtet ist, den Heißgetränkeautomaten entsprechend des zuvor beschriebenen Verfahrens bzw. einer Ausführungsform davon zu steuern. Die Steuereinrichtung weist vorzugsweise einen Mikroprozessor und einen damit verbundenen Speicher auf, der ein Computerprogramm mit Befehlen enthält, deren Ausführung auf dem Mikroprozessor die Durchführung des Verfahrens bzw. einer Ausführungsform davon bewirkt.

Weitere Vorteile und Merkmale der Erfindung ergeben sich aus der nachfolgenden Beschreibung mehrerer Ausführungsbeispiele des Heißgetränkeautomaten, des Systems und des Verfahrens, wobei auf die beigefügte Zeichnung Bezug genommen wird.

In der Zeichnung zeigen
- Fig. 1a-b: ein Ausführungsbeispiel des Heißgetränkeautomaten und des Systems,
- Fig. 2: ein Ausführungsbeispiel einer Brühkammer-Kennung,
- Fig. 3: ein Ausführungsbeispiel des Verfahrens,
- Fig. 4: ein weiteres Ausführungsbeispiel des Systems,
- Fig. 5: gespeicherte Zuordnungen von Brühkammer-Kennungen und zugeordneten Informationen und
- Fig. 6: ein weiteres Ausführungsbeispiel des Verfahrens.

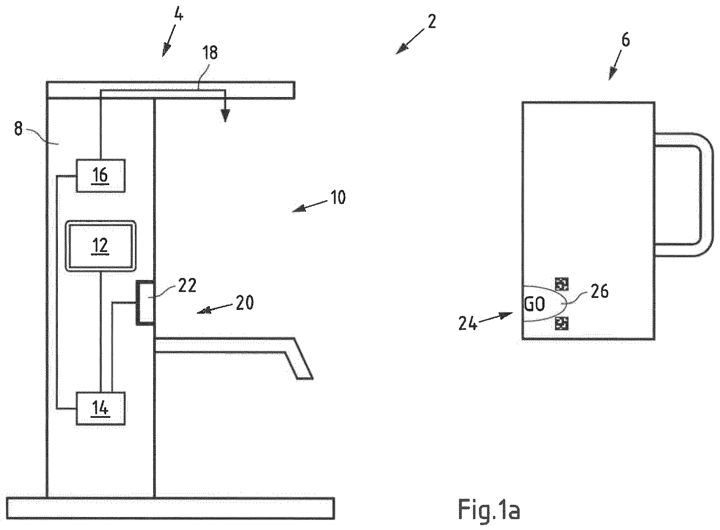

Fig. 1a zeigt ein Ausführungsbeispiel des Systems sowie ein Ausführungsbeispiel des Heißgetränkeautomaten als Teil des Systems.

Das System 2 umfasst den Heißgetränkeautomaten 4, bei dem es sich vorliegend um einen Teeautomaten handelt, sowie eine an den Teeautomaten 4 angepasste Brühkammer 6. Der Teeautomat 4 weist ein Grundgerät 8 mit einer Brühkammer-Aufnahme 10 auf, in die die Brühkammer 6 einsetzbar ist.

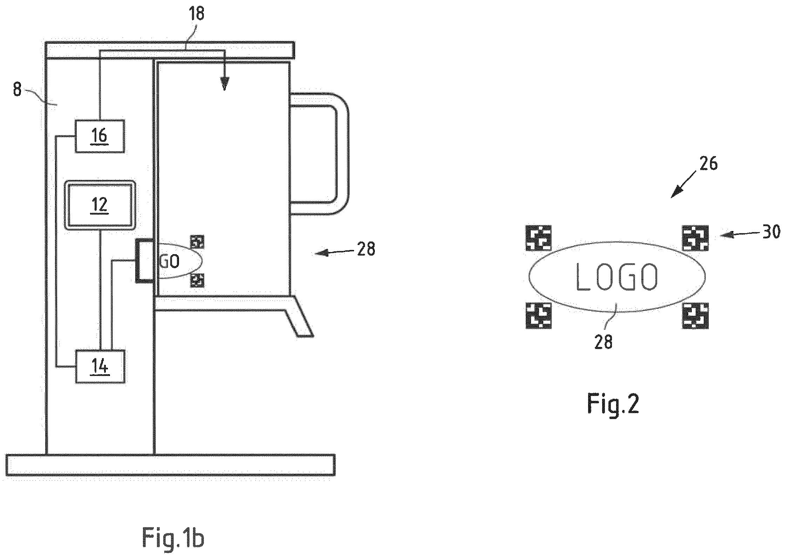

Um mit dem Teeautomaten 4 ein Teegetränk zuzubereiten, gibt der Benutzer des Teeautomaten 4 eine Portion Teeblätter in die Brühkammer, beispielsweise indem er ein mit Teeblättern gefülltes Teesieb in die Brühkammer einsetzt, und setzt die Brühkammer 6 in die Brühkammer-Aufnahme 10 wie in Fig. 1b dargestellt ein. Anschließend kann der Benutzer über eine Benutzerschnittstelle 12, beispielsweise einen Touchscreen, einen Befehl zur Zubereitung des Teegetränks eingeben. Die weitere Zubereitung des Teegetränks erfolgt dann automatisch und wird über eine im Grundgerät 8 angeordnete Steuereinrichtung 14 gesteuert. Die Steuereinrichtung 14 umfasst hierzu einen Mikroprozessor und einen Speicher mit einem Computerprogramm, auf dem ein Programm gespeichert ist, dessen Ausführung auf dem Mikroprozessor die Steuerung des Teeautomaten 4 bewirkt.

Zur Zubereitung des Teegetränks steuert die Steuereinrichtung 14 insbesondere eine Heißwasserversorgung 16 an, die über eine Heißwasserzuleitung 18 eine vorgegebene Portion heißes Wasser in die Brühkammer 6 einleitet, so dass das Wasser mit den dort befindlichen Teeblättern in Kontakt kommt. Nach Ablauf einer vorgegebenen Brühzeit unterbricht die Steuereinrichtung den Kontakt der Teeblätter mit dem inzwischen fertig gestellten Teegetränk, beispielsweise indem sie einen (nicht dargestellten) Mechanismus ansteuert, der die Teeblätter aus dem Wasser in der Brühkammer herausbefördert.

Da beim Brühvorgang heißes Wasser über die Heißwasserzuleitung 18 in die Brühkammer 6 geleitet wird, ist es für die Bediensicherheit wichtig, dass es sich bei der Brühkammer 6 um eine hierfür geeignete bzw. zugelassene Brühkammer handelt und dass diese richtig in der Brühkammer-Aufnahme angeordnet ist. Bei falscher Positionierung der Brühkammer in der Brühkammer-Aufnahme, bei Verwendung einer ungeeigneten Brühkammer oder wenn die Brühkammer gänzlich fehlt, besteht ansonsten das Risiko, dass der Benutzer durch das heiße Wasser oder eine beschädigte Brühkammer verletzt wird.

Aus diesem Grund weist der Teeautomat 4 Brühkammer-Erkennungsmittel 20 auf, die beim vorliegenden Beispiel die Steuereinrichtung 14 und eine daran angeschlossene Kamera 22 umfassen, die am Grundgerät 8 im Bereich der Brühkammer-Aufnahme 10 angeordnet ist. Die Kamera 22 ist so am Grundgerät 8 positioniert, dass sie eine an der Brühkammer 6 an einer vorgegebenen Stelle 24 angebrachte Brühkammer-Kennung 26 erfassen kann, wenn die Brühkammer 6 wie in Fig. 1b dargestellt in einer vorgegebenen Betriebsposition 28 in die Brühkammer-Aufnahme 10 eingesetzt ist.

Die Steuereinrichtung 14 wertet die von der Kamera 22 erfassten Bilddaten aus und prüft, ob diese eine Brühkammer-Kennung enthalten. Wenn dies der Fall ist, wertet die Steuereinrichtung 14 weiter aus, ob die in den Bilddaten enthaltene Brühkammer-Kennung gültig ist, d.h. vorgegebenen Prüfkriterien genügt. Insbesondere kann die Steuereinrichtung 14 anhand der Brühkammer-Kennung feststellen, ob die Brühkammer für den Brühvorgang geeignet ist. Die Steuereinrichtung 14 steuert den Teeautomaten 4 dann abhängig vom Ergebnis dieser Auswertungen der Bilddaten. So kann die Steuereinrichtung 14 beispielsweise die Durchführung eines Brühvorgangs blockieren, wenn keine oder eine ungültige Brühkammer-Kennung erkannt wurde.

Auf diese Weise ist der Teeautomat 4 über die Brühkammer-Erkennungsmittel 20 nicht nur in der Lage zu erkennen, ob eine Brühkammer in die Brühkammer-Aufnahme 10 eingesetzt ist, sondern auch die Brühkammer 6 anhand der Brühkammer-Kennung 26 zu identifizieren bzw. zu prüfen, ob die Brühkammer 6 für den Brühvorgang geeignet ist, es sich zum Beispiel um ein geprüftes Originalprodukt handelt. Dies erhöht die Bediensicherheit des Teeautomaten 4. Insbesondere lässt sich die Überprüfung der Brühkammer 6 mittels der Brühkammer-Erkennungsmittel 20 viel schwieriger umgehen als ein einfacher Sicherheitsschalter.

Fig. 2 zeigt ein Ausführungsbeispiel der Brühkammer-Kennung 26. Die Brühkammer-Kennung 26 umfasst ein Text/Bildelement 28 in Form eines Firmenlogos. Durch Erkennen des Firmenlogos können die Brühkammer-Erkennungsmittel 20 feststellen, ob es sich bei der Brühkammer 6 um ein für den Teeautomaten 4 zugelassenes Originalprodukt handelt. Weiterhin umfasst die Brühkammer-Kennung 26 einen maschinenlesbaren Code 30, beispielsweise einen Barcode oder QR-Code. In dem Code kann zum Beispiel eine individuelle Kennung der Brühkammer gespeichert sein, beispielsweise ein Zahlencode, mit dem sich mehrere gleichartige Brühkammern voneinander unterscheiden lassen. Durch Erfassen eines solchen Codes können die Brühkammer-Erkennungsmittel 20 damit nicht nur feststellen, ob die Brühkammer für den Teeautomaten 4 zugelassen ist, sondern auch um welche Brühkammer es sich konkret handelt. Weiterhin kann der Code 30 auch eine verschlüsselte Kennung enthalten, die die Nachahmung bzw. das Kopieren der Brühkammer-Kennung 26 erschwert.

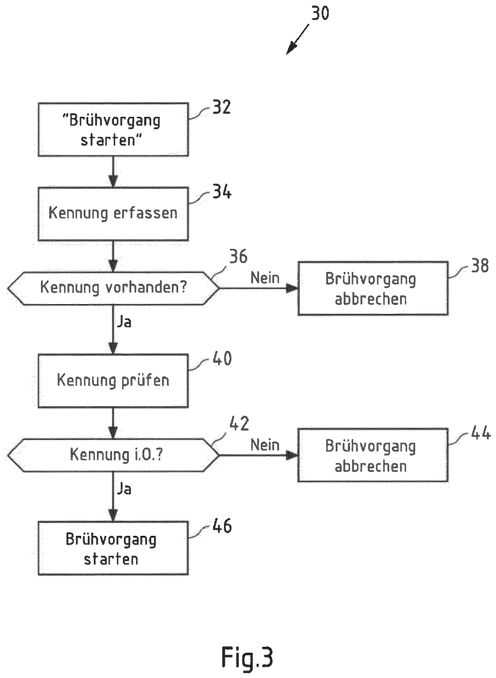

Fig. 3 zeigt nun ein Ausführungsbeispiel des Verfahrens zur Steuerung des Teeautomaten 4. Insbesondere ist die Steuereinrichtung 14 des Teeautomaten 4 dazu eingerichtet, den Teeautomaten 4 entsprechend dieses Verfahrens zu steuern. Dazu ist im Speicher der Steuereinrichtung 14 vorzugsweise ein Computerprogramm mit Befehlen gespeichert, deren Ausführung auf dem Mikroprozessor der Steuereinrichtung die Steuerung des Teeautomaten 4 entsprechend dieses Verfahrens bewirkt.

Das Verfahren 30 wird gestartet durch eine Benutzereingabe 32 des Benutzers über die Benutzerschnittstelle 12, mit der der Benutzer den Befehl gibt, einen Brühvorgang durchzuführen.

Im Schritt 34 erfasst die Kamera 22 Bilddaten und die Steuereinrichtung 14 wertet im Schritt 36 aus, ob die Bilddaten eine Brühkammer-Kennung zeigen. Enthalten die Bilddaten keine Brühkammer-Kennung, kann dies insbesondere folgende Ursachen haben:
a) Es ist keine Brühkammer in die Brühkammer-Aufnahme eingesetzt.
b) Die Brühkammer ist in der Brühkammer-Aufnahme nicht richtig positioniert.
c) Es ist eine Brühkammer ohne Brühkammer-Kennung in die Brühkammer-Aufnahme eingesetzt.
Entsprechend bricht die Steuereinrichtung 14 den Brühvorgang ab (Schritt 38), wenn sie feststellt, dass die Bilddaten keine Brühkammer-Kennung enthalten.

Falls die Bilddaten eine Brühkammer-Kennung enthalten, prüft die Steuereinrichtung 14 die erfasste Brühkammer-Kennung in Schritt 40 anhand vorgegebener Prüfkriterien. Beispielsweise kann die Steuereinrichtung 14 feststellen, ob die erfasste Brühkammer-Kennung ein vorgegebenes Logo 28 enthält oder ob in einem maschinenlesbaren Code 30 der Brühkammer-Kennung ein bestimmter Zahlencode, beispielsweise eine gültige Seriennummer, codiert ist.

Stellt die Steuereinrichtung 14 in Schritt 42 fest, dass die Brühkammer-Kennung gültig ist, es sich also zum Beispiel um eine vordefinierte Brühkammer-Kennung handelt oder die Brühkammer-Kennung einen gültigen Zahlencode enthält, so fährt die Steuereinrichtung in Schritt 46 mit dem Brühvorgang fort.

Ist die Brühkammer-Kennung hingegen ungültig, bricht die Steuereinrichtung 14 in Schritt 44 den Brühvorgang ab. Eine ungültige Brühkammer-Kennung kann beispielsweise darauf hindeuten, dass es sich bei der Brühkammer nicht um ein zugelassenes Originalprodukt handelt bzw. dass die Brühkammer für den Brühvorgang nicht geeignet ist.

Die in Fig. 3 separat dargestellten Schritte 36 bis 42 mit der zweischrittigen Prüfung, ob überhaupt eine Brühkammer-Kennung vorhanden ist und ob die Brühkammer-Kennung gültig ist, kann alternativ auch in einem einzelnen Schritt erfolgen.

Mit dem zuvor beschriebenen Verfahren wird damit die Betriebssicherheit verbessert, da der Brühvorgang, bei dem heißes Wasser aus der Heißwasserzuleitung 18 strömt, nur dann durchgeführt wird, wenn eine zugelassene Brühkammer richtig in der Brühkammer-Aufnahme positioniert ist.

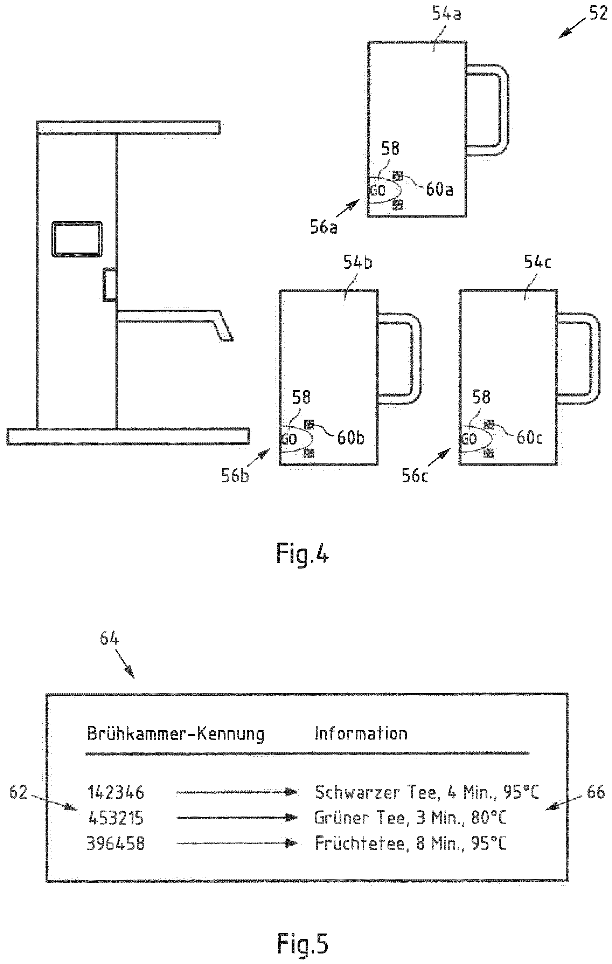

Fig. 4 zeigt ein weiteres Ausführungsbeispiel des Systems. Das System 52 umfasst den Teeautomaten 4 aus Fig. 1b und eine Mehrzahl gleichartiger Brühkammern 54a-c. Manche Benutzer bevorzugen es, für die Zubereitung verschiedener Teesorten verschiedene Brühkammern zu verwenden, damit ggf. in einer Brühkammer verbliebene Aromastoffe, Farbstoffe oder sonstige Substanzen einer Teesorte, beispielsweise eines aromatisierten Früchtetees, sich nicht auf Teegetränke anderer Teesorten übertragen. Für den Benutzer kann es jedoch schwierig sein, die gleichartigen Brühkammern 54a-c voneinander zu unterscheiden oder sich zu merken, welche Brühkammer er in der Vergangenheit für welche Teesorte benutzt hat.

Um dieses Problem zu überwinden, weisen die Brühkammern 54a-c jeweils individuelle Brühkammer-Kennungen 56a-c auf. Die Brühkammer-Kennungen 56a-c umfassen zwar dasselbe Logo 28, jedoch zusätzlich auch maschinenlesbare Codes 60a-c, in denen jeweils ein individueller Zahlencode 62, zum Beispiel eine Seriennummer der Brühkammer, codiert ist, mit dem sich jede der Brühkammern von den jeweils anderen Brühkammern unterscheiden lässt.

Wird nun eine der Brühkammern 54a-c in die Brühkammer-Aufnahme 10 des Teeautomaten 4 eingesetzt, können die Brühkammer-Erkennungsmittel 20 anhand des in der Brühkammer-Kennung 56a-c codierten Zahlencodes erkennen, um welche der Brühkammern 54a-c es sich handelt. Weiterhin kann die Steuereinrichtung 14 den Teeautomaten 4 dann abhängig von der erkannten Brühkammer-Kennung 56a-c bzw. des darin codierten Zahlencodes 62 steuern.

Zu diesem Zweck ist im Speicher der Steuereinrichtung 14 eine Liste 64 gespeichert, die verschiedenen Zahlencodes 62 der Brühkammern 54a-c Informationen 66 zuordnet, die zur Steuerung des Teeautomaten verwendet werden können.

Fig. 5 zeigt ein Beispiel einer solchen Liste 64, in der den einzelnen Zahlencodes 62 der Brühkammern bestimmte Teesorten zugeordnet sind, für deren Zubereitung die entsprechende Brühkammern vorgesehen ist bzw. für deren Zubereitung die entsprechende Brühkammer in der Vergangenheit verwendet wurde. Weiterhin sind den Zahlencodes 62 noch Brühparameter (Brühzeit und Brühtemperatur), beispielsweise die bevorzugten Brühparameter des Benutzers für die jeweilige Teesorte, zugeordnet.

Die Steuereinrichtung 14 liest für eine eingesetzte Brühkammer 54a-c die in der Liste 64 zugeordneten Informationen aus und kann diese beispielsweise über die Benutzerschnittstelle 12 an den Benutzer ausgeben. Auf diese Weise wird der Benutzer automatisch informiert, welche Brühkammer er in die Brühkammer-Aufnahme eingesetzt hat bzw. für welche Teesorte die Brühkammer vorgesehen ist.

Weiterhin stellt die Steuereinrichtung 14, ggf. nach Bestätigung durch den Benutzer, die Brühparameter des Teeautomaten 4 entsprechend der aus der Liste 64 ausgelesenen Brühparameter ein. Dies vereinfacht die Bedienung des Teeautomaten 4, da der Benutzer die Brühparameter für die entsprechende Teesorte nicht mehr manuell einstellen muss.

Die Steuereinrichtung 14 kann so eingerichtet sein, dass der Benutzer die Liste 64 über die Benutzerschnittstelle 12 ändern kann. Beispielsweise kann bei erstmaliger Benutzung einer Brühkammer über die Benutzerschnittstelle 12 eine Abfrage erfolgen, für welche Teesorte die Brühkammer verwendet werden soll, und das Ergebnis der Abfrage kann dann mit dem Zahlencode der Brühkammer verknüpft und in der Liste 64 gespeichert werden.

Weiterhin kann die Steuereinrichtung 14 dazu eingerichtet sein, die Liste 64 automatisch zu ändern. Beispielsweise können vom Benutzer für einen Brühvorgang eingestellte Brühparameter automatisch mit dem Zahlencode der eingesetzten Brühkammer verknüpft und in der Liste 64 gespeichert werden, damit diese bei der nächsten Nutzung derselben Brühkammer wieder abgerufen und automatisch eingestellt werden können.

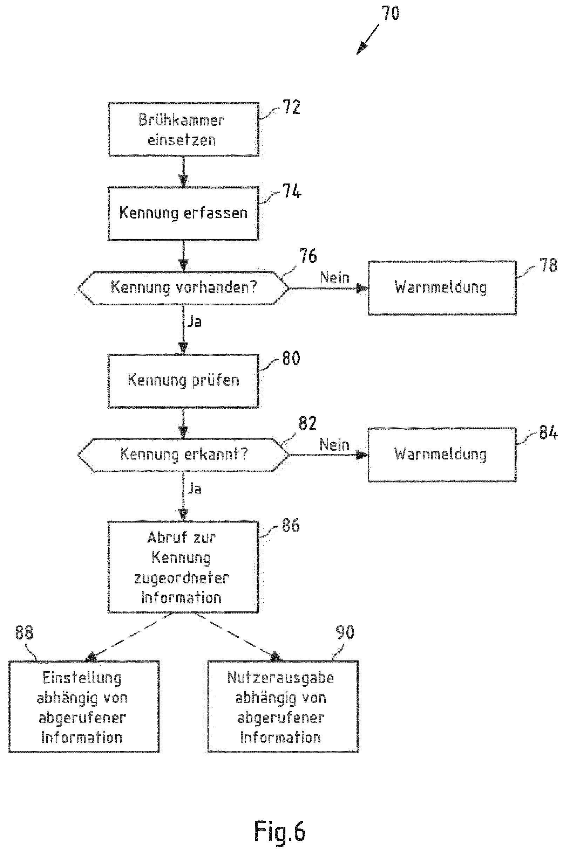

Fig. 6 zeigt ein weiteres Ausführungsbeispiel des Verfahrens zur Steuerung des Teeautomaten 4. Insbesondere ist die Steuereinrichtung 14 des Teeautomaten 4 dazu eingerichtet, den Teeautomaten 4 entsprechend dieses Verfahrens zu steuern. Dazu ist im Speicher der Steuereinrichtung 14 insbesondere ein Computerprogramm mit Befehlen gespeichert, deren Ausführung auf dem Mikroprozessor der Steuereinrichtung die Steuerung des Teeautomaten 4 entsprechend dieses Verfahrens bewirkt.

Das Verfahren 70 wird gestartet beim Einsetzen 72 einer Brühkammer in die Brühkammer-Aufnahme.

Im Schritt 74 erfasst die Kamera 22 Bilddaten und die Steuereinrichtung 14 wertet im Schritt 76 aus, ob die Bilddaten eine Brühkammer-Kennung zeigen. Ist dies nicht der Fall, gibt die Steuereinrichtung 14 über die Benutzerschnittstelle 12 eine entsprechende Warnmeldung an den Benutzer aus (Schritt 78).

Enthalten die Bilddaten eine Brühkammer-Kennung, prüft die Steuereinrichtung 14 in Schritt 80, ob diese gültig ist, d.h. vorgegebenen Prüfkriterien entspricht. Abhängig vom Ergebnis der Prüfung (Schritt 82), gibt die Steuereinrichtung 14 bei ungültiger Brühkammer-Kennung über die Benutzerschnittstelle 12 eine entsprechende Warnmeldung an den Benutzer aus (Schritt 84) und fährt ansonsten mit dem nächsten Schritt 86 fort.

Die zweischrittige Prüfung in den Schritten 76 - 82 kann auch als einschrittige Prüfung erfolgen.

Im Schritt 86 ruft die Steuereinrichtung 14 aus der Liste 64 der Brühkammer-Kennung bzw. einem darin codierten Zahlencode zugeordnete Informationen ab und steuert den Teeautomaten 4 in den nachfolgenden Schritten abhängig von diesen Informationen. Beispielweise kann die Steuereinrichtung 14 Brühparameter des Teeautomaten 4 entsprechend der abgerufenen Informationen einstellen (Schritt 88). Zusätzlich oder alternativ kann die Steuereinrichtung 14 über die Benutzerschnittstelle 12 eine den abgerufenen Informationen entsprechende Benutzerausgabe ausgeben (Schritt 90).

Die zuvor beschriebenen Systeme mit dem beschriebenen Heißgetränkeautomaten und die beschriebenen Verfahren vereinfachen die Zubereitung von Teegetränken und tragen zur Verbesserung der Benutzersicherheit bei.

## Patentansprüche

1. Heißgetränkeautomat (4), insbesondere Teeautomat, eingerichtet zur automatischen Zubereitung von Heißgetränken, insbesondere Teegetränken,
- mit einem Grundgerät (8), das eine Brühkammer-Aufnahme (10) aufweist, in die eine separate Brühkammer (6, 54a-c) zum Brühen des Heißgetränks einsetzbar ist,
**dadurch gekennzeichnet,**
**dass** der Heißgetränkeautomat (4) Brühkammer-Erkennungsmittel (20) aufweist, die dazu eingerichtet sind, eine vorgegebene Brühkammer-Kennung (26, 56a-c) einer in die Brühkammer-Aufnahme (10) eingesetzten Brühkammer (6, 54a-c) zu erfassen und zu erkennen.

2. Heißgetränkeautomat nach Anspruch 1,
**dadurch gekennzeichnet, dass** die Brühkammer-Erkennungsmittel (20) dazu eingerichtet sind, die vorgegebene Brühkammer-Kennung (26, 56a-c) der Brühkammer (6, 54a-c) berührungsfrei, insbesondere optisch zu erfassen.

3. Heißgetränkeautomat nach Anspruch 1 oder 2,
**dadurch gekennzeichnet, dass** die Brühkammer-Erkennungsmittel (20) dazu eingerichtet sind zu erfassen, ob sich die in die Brühkammer-Aufnahme (10) eingesetzte Brühkammer (6, 54a-c) in einer vordefinierten Position in der Brühkammer-Aufnahme (10) befindet.

4. Heißgetränkeautomat nach einem der Ansprüche 1 bis 3,
**dadurch gekennzeichnet, dass** der Heißgetränkeautomat (4) eine Steuereinrichtung (14) aufweist, die dazu eingerichtet ist, den Heißgetränkeautomaten (4) abhängig vom Erkennen einer vorgegebenen Brühkammer-Kennung (26, 56a-c) zu steuern.

5. Heißgetränkeautomat nach Anspruch 4,
**dadurch gekennzeichnet, dass** die Steuereinrichtung (14) dazu eingerichtet ist, eine Funktion des Heißgetränkeautomaten (4) abhängig vom Erkennen einer vorgegebenen Brühkammer-Kennung (26,56a-c) freizugeben.

6. Heißgetränkeautomat nach einem der Ansprüche 1 bis 5,
**dadurch gekennzeichnet, dass** die Steuereinrichtung (14) dazu eingerichtet ist, das Erkennen einer vorgegebenen Brühkammer-Kennung (26, 56a-c) während der Zubereitung eines Heißgetränks zu überprüfen.

7. Heißgetränkeautomat nach einem der Ansprüche 1 bis 6,
**dadurch gekennzeichnet, dass** die Brühkammer-Erkennungsmittel (20) dazu eingerichtet sind, verschiedene vorgegebene Brühkammer-Kennungen (26, 56a-c) zu erkennen, und dass die Steuereinrichtung (14) dazu eingerichtet ist, den Heißgetränkeautomaten (4) entsprechend einer der erkannten Brühkammer-Kennung (26, 56a-c) zugeordneten Steueranweisung zu steuern.

8. Heißgetränkeautomat nach einem der Ansprüche 1 bis 7,
**dadurch gekennzeichnet, dass** die Steuereinrichtung (14) dazu eingerichtet ist, eine Information (66) über den Betrieb des Heißgetränkeautomaten (4) der Brühkammer-Kennung (26, 56a-c) der während des Betriebs eingesetzten Brühkammer (6, 54a-c) zuzuordnen und in einem Speicher des Heißgetränkeautomaten (4) abzuspeichern.

9. Heißgetränkeautomat nach einem der Ansprüche 1 bis 8,
**dadurch gekennzeichnet, dass** die Steuereinrichtung (14) dazu eingerichtet ist, eine der erkannten Brühkammer-Kennung (26, 54a-c) zugeordnete Information (66) über den Betrieb des Heißgetränkeautomaten (4) aus einem Speicher des Heißgetränkeautomaten (4) abzurufen und den Heißgetränkeautomaten (4) abhängig von der abgerufenen Information (66) zu steuern.

10. Heißgetränkeautomat nach einem der Ansprüche 1 bis 9,
**dadurch gekennzeichnet, dass** der Heißgetränkeautomat (4) eine Steuereinrichtung (14) aufweist, die dazu eingerichtet ist, den Heißgetränkeautomaten (4) entsprechend eines Verfahrens nach Anspruch 14 zu steuern.

11. System (2, 52) umfassend:
- einen Heißgetränkeautomaten (4) nach einem der Ansprüche 1 bis 10 und
- eine separate Brühkammer (6, 54a-c), die in die Brühkammer-Aufnahme (10) des Heißgetränkeautomaten (4) einsetzbar ist,
- wobei die Brühkammer (6, 54a-c) eine Brühkammer-Kennung (26, 56a-c) aufweist und
- wobei die Brühkammer-Erkennungsmittel (20) dazu eingerichtet sind, die Brühkammer-Kennung (26, 56a-c) der Brühkammer (6, 54a-c) zu erfassen und zu erkennen, wenn die Brühkammer (6, 54a-c) in die Brühkammeraufnahme (10) eingesetzt ist.

12. System nach Anspruch 11, umfassend mehrere separate Brühkammern (6, 54a-c), die in die Brühkammer-Aufnahme (10) des Heißgetränkeautomaten (4) einsetzbar sind, wobei jede der Brühkammern (6, 54a-c) jeweils eine individuelle Brühkammer-Kennung (26, 56a-c) aufweist, die eine Unterscheidung der einzelnen Brühkammern (6, 54a-c) voneinander erlaubt.

13. Brühkammer (6, 54a-c) für ein System (2, 52) nach Anspruch 11 oder 12, die dazu eingerichtet ist, in einen Heißgetränkeautomaten (4) nach einem der Ansprüche 1 bis 10 eingesetzt zu werden, wobei die Brühkammer (6, 54a-c) eine maschinenlesbare Brühkammer-Kennung (26, 56a-c) aufweist, die eine Identifikation der Brühkammer (6, 54a-c) durch die Brühkammer-Erkennungsmittel (20) des Heißgetränkeautomaten (4) erlaubt.

14. Verfahren (30, 70) zur Steuerung eines Heißgetränkeautomaten (4) nach einem der Ansprüche 1 bis 10,
- bei dem die Brühkammer-Erkennungsmittel (20) eine Brühkammer-Kennung (26, 56a-c) einer in die Brühkammer-Aufnahme (10) eingesetzten Brühkammer (6, 54a-c) erfassen,
- bei dem die Brühkammer-Erkennungsmittel (20) die erfasste Brühkammer-Kennung (26, 56a-c) erkennen und
- bei dem der Heißgetränkeautomat (4) abhängig von der erfassten Brühkammer-Kennung (26, 56a-c) gesteuert wird.
